# EUROPÄISCHE PATENTANMELDUNG

(11) **EP 2 399 660 A2**
(43) Veröffentlichungstag der Anmeldung: **28.12.2011**
(21) Anmeldenummer: 11004691.9
(22) Anmeldetag: 09.06.2011
(51) Int. Cl.: B01D 45/06, B01D 45/08

(54) **Partikelprallabscheider**

(30) Priorität: 28.06.2010 DE 102010025282
(71) Anmelder: ESTA Apparatebau GmbH & Co.KG, 89250 Senden (DE)
(72) Erfinder: Schaub, Frederik, 89290 Buch (DE); Drabner, Manfred, 01259 Dresden-Kleinzschwachwitz (DE)
(74) Vertreter: Meyer, Thorsten

(57) **Zusammenfassung**

Partikelprallabscheider (1) für einen Partikelverunreinigten Luftstrom zur Durchströmung, mit zwei senkrecht angeordnete Gruppen (2 und 3) von parallel zueinander angeordneten V-Profilen (21, 31), welche im Querschnitt V-förmig ausgestaltet sind, wobei die V-Profile (21) der ersten Gruppe (2) mit der Spitze (22) des V-förmigen Querschnitts in Anströmrichtung (5) ausgerichtet sind, und die V-Profile (31) der zweiten Gruppe (3) mit der Spitze (32) des V-förmigen Querschnitts entgegengesetzt der Anströmrichtung (5) ausgerichtet sind und gegenüber der ersten Gruppe (2) nach hinten versetzt (H) sind, wobei die V-Profile (31) der zweiten Gruppe (3) dabei so seitlich (V) und nach hinten gegenüber den V-Profilen (21) der ersten Gruppe (2) versetzt sind, dass die Spitzen (32) des V-förmigen Querschnitts in der Mitte zwischen Lücken der Spitzen (22) des V-förmigen Querschnitts der V-Profile (21) der ersten Gruppe (2) angeordnet sind, und dass die von den Spitzen (22, 32) der V-förmigen Querschnitte abragenden Schenkel (23, 33) in einem Teilbereich sich Überdecken und so einen Schlitzkanal (4) bilden.

## Beschreibung

Die Erfindung betrifft einen Partikelprallabscheider für einen Partikelverunreinigten Luftstrom zur waagerechten Anströmung.

Absauganlagen für industrielle Anwendungen wie beispielsweise Werkhallen werden oft durch Partikelbelasteten Luftstrom in der Funktion beeinträchtigt. So führt ein hoher Partikelanteil zu vorschnellem Zusetzen der in solchen Absauganlagen vorgesehenen Filter. Zudem ist gerade bei Schweißrauch belasteter Luft problematisch, dass diese noch heiße oder glühende Partikel und Teilchen enthalten können welche zu einem Abbrand des Filters oder dem Luftstrom ausgesetzten Teilen wie Schläuche oder dergleichen der Anlage führen können.

Wünschenswert wäre es bei den von der Bauform her möglichst platzsparend konstruierten Absauganlagen eine Ausscheidung von Partikeln größer als einem vorbestimmten Durchmesser oder Eigengewicht vor Kontakt derselben mit dem in der Anlage angeordneten Filterkörper zu erreichen.

Dabei sollte der Partikelabscheider möglichst einfach in bestehende kompakte Absauganlagen zu integrieren sein.

Aufgabe der Erfindung ist es daher einen Partikelfilter für Absauganlagen zur Verfügung zu stellen, bei dem eine einfache und kompakte Konstruktion eine möglichst effektive Selektion von Partikeln ermöglicht.

Diese Aufgabe wird durch einen Partikelprallabscheider nach den Merkmalen des Anspruchs 1 gelöst.

Erfindungsgemäß ist ein Partikelprallabscheider für einen Partikelverunreinigten Luftstrom zur Durchströmung, mit zwei senkrecht angeordnete Gruppen von parallel zueinander angeordneten V-Profilen, welche im Querschnitt V-förmig ausgestaltet sind, wobei die V-Profile der ersten Gruppe mit der Spitze des V-förmigen Querschnitts in Anströmrichtung ausgerichtet sind, und die V-Profile der zweiten Gruppe mit der Spitze des V-förmigen Querschnitts entgegengesetzt der Anströmrichtung ausgerichtet sind und gegenüber der ersten Gruppe nach hinten versetzt sind, wobei die V-Profile der zweiten Gruppe dabei so seitlich und nach hinten gegenüber den V-Profile der ersten Gruppe versetzt sind, dass die Spitzen des V-förmigen Querschnitts in der Mitte zwischen Lücken der Spitzen des V-förmigen Querschnitts der V-Profile der ersten Gruppe angeordnet sind, und dass die von den Spitzen des V-förmigen Querschnitts abragenden Schenkel in einem Teilbereich sich Überdecken und so einen Schlitzkanal bilden. Mit der Erfindung wird gewährleistet, dass die Staubbeladung des Luftstroms deutlich sinkt und die Filterelemente nur noch mit feinen Staubpartikeln beaufschlagt werden. Dies führt zu einer deutlichen Verlängerung der Filterstandzeit und einer Reduktion der Betriebskosten, da weniger Druckluft für die Filterreinigung erforderlich ist und die Lebensdauer der Filter verlängert wird.

Erfindungsgemäße Partikelprallabscheider können sowohl in Entstaubungsanlagen zur Abscheidung grober Materialien als auch in Schweiß-, Laser- und Brennschneid- und Rauchabsauganlagen eingesetzt werden. Beim Einsatz in Rauchabsauganlagen verhindert der vorgeschlagene Partikelprallabscheider effektiv, dass im Luftstrom enthaltene Funken auf die nachfolgenden Filterelemente treffen können und vermindert so das Risiko von Filterbränden.

Eine vorteilhafte Ausgestaltung der Erfindung sieht vor, dass die V-Profile der beiden Gruppen an ihren Enden in einem Rahmen befestigt sind, wobei eine Profilschiene des Rahmens an der unteren Seite mit einer Öffnung oder Öffnungen versehen ist.

Die abgeschiedenen Partikel können so in einer Auffangvorrichtung unterhalb des Partikelprallabscheider gesammelt werden. Die im "Knick" der V-Profile abgebremsten Partikel können so unten aus dem Partikelprallabscheider herausfallen. Beim Einsatz in Rauchgasabsauganlagen ist ein separater Auffangbehälter von Vorteil, der vom Auffangbehälter unter den Filterelementen getrennt ist.

Als weiterer Vorteil neben der Vorabscheidung bewirkt der Partikelprallabscheider, dass der angesaugte Luftvolumenstrom großflächig und gleichmäßig seitlich auf die nachgeschalteten Filterelemente verteilt wird. Dadurch wird die Aufströmgeschwindigkeit innerhalb des Filtergehäuses erheblich reduziert und die gleichmäßige Beaufschlagung aller Filterelemente mit der angesaugten Luft unterstützt.

Die Größe des Partikelprallabscheiders ist dem jeweiligen Luftvolumenstrom der Absauganlage, in welche er integriert wird, angepasst.

So ist nach einer Ausgestaltung der Erfindung vorgeschlagen, dass die Luftstromgeschwindigkeit und/oder der Abstand der beiden Gruppen der V-Profile und/oder deren Schenkellänge so gewählt ist, dass die Anströmgeschwindigkeit als Geschwindigkeit im Schlitzkanal zwischen den beiden V-Profil-Reihen, resultierend aus der Luftmenge und der zur Verfügung stehenden offenen Fläche auf den Partikelprallabscheider geringer ist, als die Geschwindigkeit durch die sich in den überlappenden Bereichen der Lamellen einstellende Sogwirkung.

Hierdurch werden von Vorteil im Luftstrom mitgeführte Partikel größer als einem vorgewählten Durchmesser in den Ecken der zweiten Gruppe abgebremst. Dadurch ergibt sich im Bereich der Ecken der V-förmigen Profile ein strömungstoter Raum. Durch den vertikalen Einbau des Partikelprallabscheider kann das in den strömungstoten Raum transportierte Material bis zu einer definierten Partikelgröße nach unten abrutschen und wird so aus dem Luftstrom abgeschieden.

Weitere vorteilhafte Ausgestaltungen ergeben sich aus den weiteren Unteransprüchen oder deren mögliche Unterkombinationen.

Nachfolgend wird die Erfindung anhand der Zeichnungen weiter erläutert. Im Einzelnen zeigt die schematische Darstellung in:
- Fig. 1: eine schematische Darstellung eines erfindungsgemäßen Partikelprallabscheider für einen Partikelverunreinigten Luftstrom zur waagerechten Anströmung,
- Fig. 2: eine schematische Darstellung des Partikelverunreinigten aus Fig. 1 von vorne gesehen,
- Fig. 3: eine schematische Schnittdarstellung entlang der waagerechten Line III durch den Partikelprallabscheider aus Fig. 2, und
- Fig. 4: das vergrößerte Detail IV aus Fig. 3.

Die in den Figuren gleichen Bezugsziffern bezeichnen gleiche oder gleich wirkende Elemente.

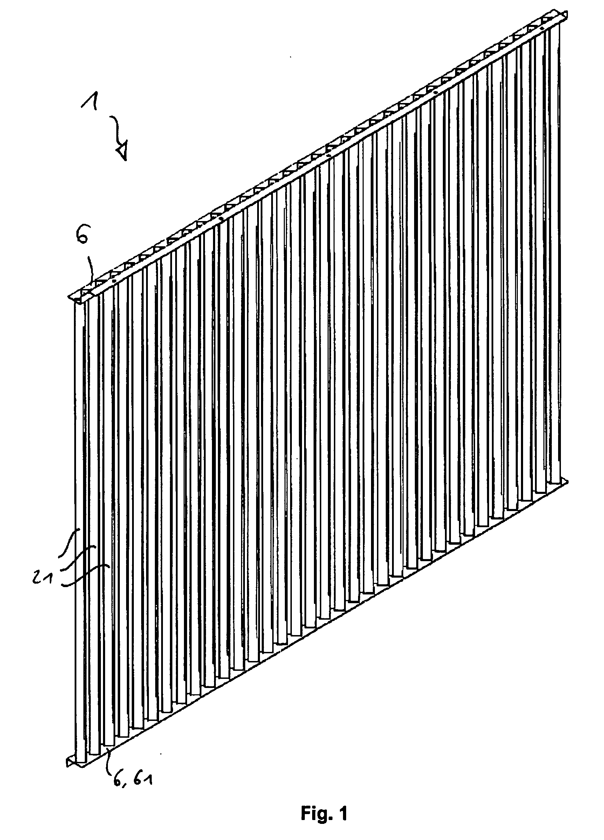

Die Fig. 1 bis 4 zeigen einen beispielhaften erfindungsgemä-Ben Partikelprallabscheider 1 für einen Partikelverunreinigten Luftstrom zur waagerechten Anströmung.

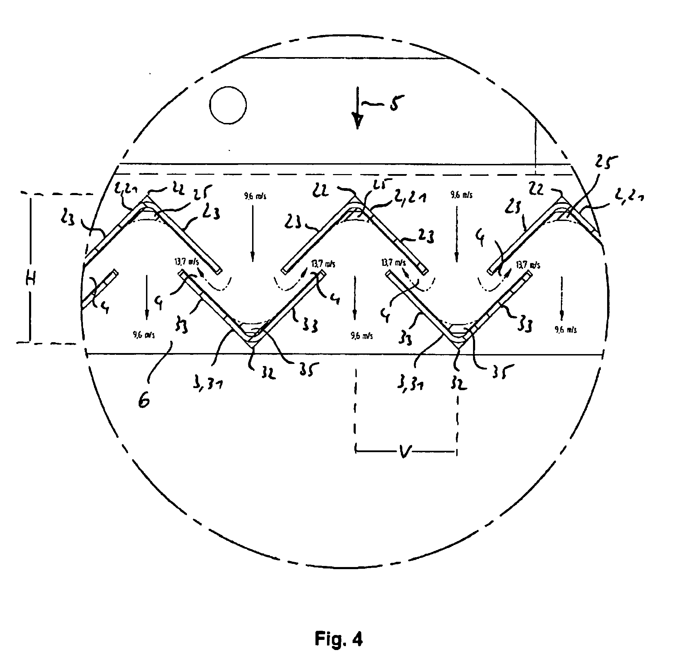

Die V-Profile 21, 31 sind dabei parallel zueinander und senkrecht orientiert in zwei Gruppen 2 und 3 angeordnet. von V-Profilen. Im waagerechten Querschnitt sind dieser V-förmig ausgestaltet (siehe Fig. 4).

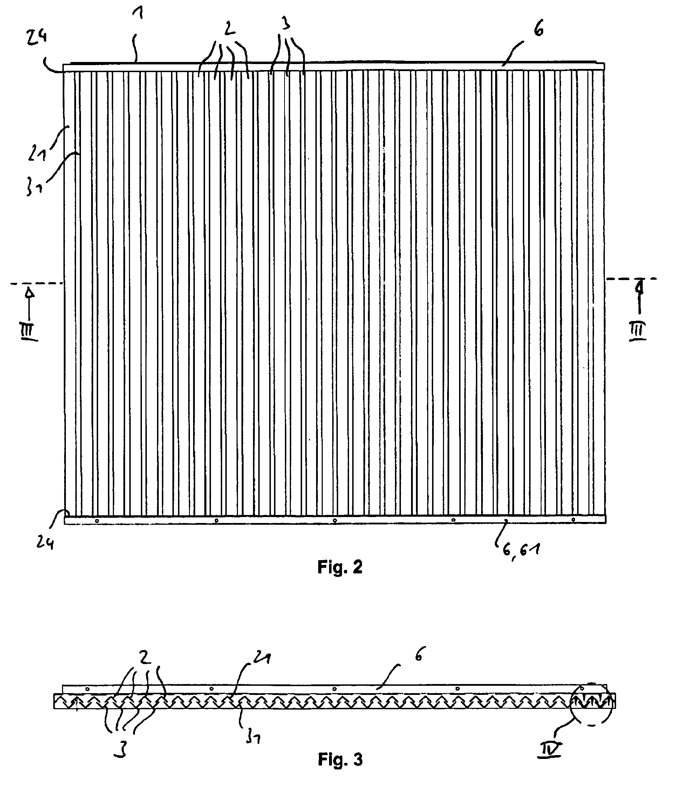

In Fig. 3 und 4 ist ersichtlich, dass die V-Profile 21 der ersten Gruppe 2 mit der Spitze 22 des V-förmigen Querschnitts in Anströmrichtung 5, die V-Profile 31 der zweiten Gruppe 3 mit der Spitze 32 des V-förmigen Querschnitts entgegengesetzt der Anströmrichtung 5 ausgerichtet sind.

Dabei sind die Gruppen 2 und 3 gegeneinander nach hinten versetzt (H) sind, und so seitlich (V) versetzt sind, dass die Spitzen 32 des V-förmigen Querschnitts in der Mitte zwischen Lücken der Spitzen 22 des V-förmigen Querschnitts der V-Profile 21 der ersten Gruppe 2 angeordnet sind (siehe Fig. 4).

Die von den Spitzen 22, 32 der V-förmigen Querschnitte abragenden Schenkel 23, 33 Überdecken sich in einem Teilbereich dergestalt, dass diese jeweils einen Schlitzkanal 4 bilden.

Die strömungstechnische Auslegung des Partikelprallabscheider kann dabei so erfolgen, dass alle Partikel, die größer sind als eine vorgewählte Größe aufgrund der aus ihrer größeren Masse resultierenden Fliehkraft in die strömungstoten Bereiche der Knicke auf der Rückseite der Spitzen der V-Profile 21, 31 geleitet werden. In diesem strömungstoten Bereich ist der abwärtsgerichtete Geschwindigkeitsvektor in Relation so groß, dass die Partikel nach unten abgeleitet und abgeschieden werden. Kleinere Partikel, deren Größe unterhalb der vorgewählten Größe liegen, passieren den Partikelprallabscheider.

Durch die gegenseitig ausgerichteten Profile findet dieser Separationsvorgang zweimal hintereinander statt.

Beim Einsatz in Rauchabsauganlagen, in denen Funken und/oder glühende Partikel vor abgeschieden werden sollen, wird durch die o.g. Funktionsweise sichergestellt, dass im kalkulierbaren Regelfall die thermische Energie der Partikel keine Gefahr mehr für die nach geschalteten Filterelemente darstellt, da die kinetische Energie bei < 10 mJ liegt. Dieser Wert wird erst bei einer Partikelgröße > 260 µm erreicht.

Die größeren - und damit zündfähigen Partikel werden durch nach unten abgeschieden. Die feineren Partikel, die keine relevante Zündenergie besitzen, werden durch die Querströmung durch den Partikelprallabscheider geleitet.

### Bezugszeichenliste

- 1: Partikelprallabscheider

- 2: erste Gruppe
- 21: V-Profil
- 22: Spitze
- 23: Schenkel
- 24: Ende
- 25: strömungstoter Bereich

- 3: zweite Gruppe
- 31: V-Profil
- 32: Spitze
- 33: Schenkel
- 34: Ende
- 35: strömungstoter Bereich

- 4: Schlitzkanal

- 5: Anströmrichtung

- 6: Rahmen
- 61: Profilschiene

- H: nach hinten versetzt
- V: seitlich versetzt

## Patentansprüche

1. Partikelprallabscheider (1) für einen Partikelverunreinigten Luftstrom zur Durchströmung, mit zwei senkrecht angeordnete Gruppen (2 und 3) von parallel zueinander angeordneten V-Profilen (21, 31), welche im Querschnitt V-förmig ausgestaltet sind, wobei die V-Profile (21) der ersten Gruppe (2) mit der Spitze (22) des V-förmigen Querschnitts in Anströmrichtung (5) ausgerichtet sind, und die V-Profile (31) der zweiten Gruppe (3) mit der Spitze (32) des V-förmigen Querschnitts entgegengesetzt der Anströmrichtung (5) ausgerichtet sind und gegenüber der ersten Gruppe (2) nach hinten versetzt (H) sind, wobei die V-Profile (31) der zweiten Gruppe (3) dabei so seitlich (V) und nach hinten gegenüber den V-Profilen (21) der ersten Gruppe (2) versetzt sind, dass die Spitzen (32) des V-förmigen Querschnitts in der Mitte zwischen Lücken der Spitzen (22) des V-förmigen Querschnitts der V-Profile (21) der ersten Gruppe (2) angeordnet sind, und dass die von den Spitzen (22, 32) der V-förmigen Querschnitte abragenden Schenkel (23, 33) in einem Teilbereich sich Überdecken und so einen Schlitzkanal (4) bilden.

2. Partikelprallabscheider nach Anspruch 1,
**dadurch gekennzeichnet,**
**dass** die V-Profile (21, 31) der beiden Gruppen an ihren Enden (24, 34) in einem Rahmen (6) befestigt sind, wobei eine Profilschiene (61) des Rahmens an der unteren Seite mit einer Öffnung oder Öffnungen versehen ist.

3. Partikelprallabscheider nach Anspruch 1 oder 2,
**dadurch gekennzeichnet,**
**dass** die Luftstromgeschwindigkeit und/oder der Abstand der beiden Gruppen der V-Profile und/oder deren Schenkellänge so gewählt ist,
**dass** die Anströmgeschwindigkeit als Geschwindigkeit im Schlitzkanal (4) zwischen den beiden V-Profil-Reihen, resultierend aus der Luftmenge und der zur Verfügung stehenden offenen Fläche auf den Partikelprallabscheider geringer ist, als die Geschwindigkeit durch die sich in den überlappenden Bereichen der Lamellen einstellende Sogwirkung.
